(19) Europäisches Patentamt

European Patent Office

Office européen des brevets

(11) **EP 0 718 495 A1**

(12) **EUROPÄISCHE PATENTANMELDUNG**

(43) Veröffentlichungstag:
26.06.1996 Patentblatt 1996/26

(51) Int. Cl.⁶: **F03D 11/00**, H02G 13/00

(21) Anmeldenummer: 95120075.7

(22) Anmeldetag: 19.12.1995

(84) Benannte Vertragsstaaten:
BE DE DK ES FR GB GR IE IT NL SE

(30) Priorität: 22.12.1994 DE 4445899
18.01.1995 DE 19501267

(71) Anmelder: AUTOFLUG ENERGIETECHNIK GmbH
+ CO.
D-25462 Rellingen (DE)

(72) Erfinder:
• Scheibe Klaus Prof.Dr.Ing.
24111 Kiel (DE)

• Kühn Arne Ing.
24147 Klausdorf (DE)
• Lehmann Eberhard Ing.
24103 Kiel (DE)
• Peters Mark-Oliver Ing.
25495 Kummerfeld (DE)

(74) Vertreter: Müller, Karl-Ernst, Dr.
Patentanwälte
Becker & Müller
Eisenhüttenstrasse 2
40882 Ratingen (DE)

(54) **Windkraftanlage mit Blitzstromableitung**

(57) Bei einer Windkraftanlage mit einem Turm, in deren von diesem getragenen Turmkopf ein von einem Rotor angetriebener Generator angeordnet ist, wobei der Rotor um eine vom Turmkopf gehaltene Nabe drehbar und mit Rotorblättern versehen ist, soll eine auch bei laufendem Rotor wirksame Blitzschutzeinrichtung gegeben sein. Hierzu ist vorgesehen, daß die Rotorblätter (14) über ihren Verlauf wenigstens eine Leiterbahn (17) aus einem leitenden Material aufweisen und daß die Leiterbahnen (17) im Normalbetrieb zum Erdpotential (29) galvanisch getrennt und bei durch atmosphärische Entladung gegebener Blitzstrombeanspruchung eine niederohmige Verbindung zwischen den Leiterbahnen (17) der Rotorblätter (14) und der Erde über durch die Beanspruchung gezündete Entladungsstrecken (23, 30, 31) mit nachfolgender Erdleitung (29) geschaltet ist.

Fig. 1

EP 0 718 495 A1

Beschreibung

Die Erfindung betrifft eine Windkraftanlage mit einem Turm, in deren von diesem getragenen Turmkopf ein von einem Rotor angetriebener Generator angeordnet ist, wobei der Rotor um eine vom Turmkopf gehaltene Nabe drehbar und mit Rotorblättern versehen ist, wobei die Windkraftanlage eine Blitzschutzeinrichtung aufweist.

Eine Windkraftanlage mit den vorgenannten Merkmalen ist in der WO 94/25752 beschrieben; die bei der bekannten Windkraftanlage vorgesehene Blitzschutzeinrichtung setzt in ihren unterschiedlichen beschriebenen Ausführungsformen im Falle eines Gewitters jeweils ein Stillsetzen der Windkraftanlage voraus. Somit ist mit der bekannten Windkraftanlage der Nachteil verbunden, daß zunächst ein sicher arbeitendes Gewitter-Warnsystem vorhanden sein muß, damit das Stillsetzen des Rotors rechtzeitig erfolgen kann, wobei aber mit Blick auf die Betriebszeit der Windkraftanlage das Stillsetzen nicht ohne Not erfolgen soll.

Der Erfindung liegt daher die Aufgabe zugrunde, bei einer Windkraftanlage die Blitzschutzeinrichtung derart auszubilden, daß die Blitzschutzwirkung auch bei laufendem Rotor gegeben ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß die Rotorblätter über ihren Verlauf wenigstens eine Leiterbahn aus einem leitenden Material aufweisen und daß die Leiterbahnen im Normalbetrieb zum Erdpotential galvanisch getrennt und bei durch atmosphärische Entladung gegebener Blitzstrombeanspruchung eine niederohmige Verbindung zwischen den Leiterbahnen der Rotorblätter und der Erde über durch die Beanspruchung gezündete Entladungsstrecken mit nachfolgender Erdleitung geschaltet ist. Mit der Erfindung ist der Vorteil verbunden, daß bei der gegebenen galvanischen Trennung der Rotorblätter von der Kraftwerkserde bei einem Gewitter die Windkraftanlage nicht abgebremst und in eine Parkstellung mit einer definierten Lage der Rotorblätter überführt werden muß, weil bei der erfindungsgemäßen Blitzschutzeinrichtung auch bei laufendem Rotor der erst bei einem Blitzeinschlag auftretende Blitzstrom vom Rotorblatt bis in das Erdreich niederimpedant abgeleitet wird und keine Anlagenteile durch einen direkten Blitzeinschlag beschädigt werden. Erst bei einer Blitzeinwirkung kann der dabei auftretende Blitzstrom die der galvanischen Trennung dienenden Entladungsstrecken überbrücken und über die dadurch dynamisch hergestellte niederimpedante Verbindung zur Kraftwerkserde abfließen, ohne Beschädigungen der Teile der Windkraftanlage zu verursachen.

Nach einem Ausführungsbeispiel der Erfindung bestehen die in jedem Rotorblatt eingebrachten Leiterbahnen aus einem Geflecht von Einzelleitern aus gut leitendem Material, wobei durch das Geflecht beim Eintritt des Blitzstromes in die Spitze eines Rotorblatts eine Reduzierung der Stromdichte ermöglicht ist.

Nach einem Ausführungsbeispiel der Erfindung sind in jedem Rotorblatt mehrere längslaufende Leiterbahnen angeordnet, zwischen denen mehrfache niederimpedante Verbindungen bestehen, womit der Vorteil verbunden ist, daß auch beim Eintreffen einer Blitzentladung in die Seite eines Rotorblattes eine rasche Stromaufteilung und somit eine geringe Stromdichte bei der Ableitung des Blitzstromes zu verzeichnen sind.

In Ergänzung dazu kann es vorgesehen sein, daß die Spitze eines Rotorblattes mit einer an die Leiterbahnen angeschlossenen Kappe aus einem gut leitenden Material versehen ist.

Nach einem Ausführungsbeispiel der Erfindung ist vorgesehen, daß die Entladungsstrecken zwischen den Leiterbahnen der Rotorblätter und der Erdleitung unter Umgehung der jeweiligen Lagerteile von Rotorblättern an der Nabe und/oder der Nabe am Turmkopf und/oder Turmkopf am Turm mittels abbrandfester an den einander zugeordneten Bauteilen angeordneten Elektroden mit jeweils einem konstanten Elektrodenabstand ausgebildet sind. In vorteilhafter Weise ist dadurch der Blitzstrom von allen Lagern der Windkraftanlage ferngehalten, indem diese optional mit als Funkenstrecken ausgebildeten Entladungsstrecken beschaltet sind; damit besteht nicht nur eine galvanische Trennung zwischen der Rotorblattanordnung und den in der Windkraftanlage wirksamen Lagern, sondern auch in Reihe hierzu zwischen den Lagern und der Kraftwerkserde. Erst im Fall eines Blitzeinschlages zünden die in Reihe liegenden Funkenstrecken durch und stellen eine niederimpedante Verbindung parallel zu der Nabe des Rotors und den in Reihe dazu liegenden Lagern der Windkraftanlage her. Dabei ist vorgesehen, die Schlagweite der Entladungsstrecken kleiner als 10 mm einzustellen.

Nach einer Ausführungsform der Erfindung ist vorgesehen, die Elektroden an Rotorblättern, Nabe, Turmkopf und Turm derart anzuordnen, daß der erforderliche konstante Elektrodenabstand auch bei einer Lageveränderung der jeweiligen Bauteile gegeneinander gegeben ist, wie diese Lageveränderung bei Windkraftanlagen mit verstellbaren Rotorblättern und einer Pendellagerung für den Rotor gegenüber dem Turmkopf sowie mit einem um die Turmachse drehbaren Turmkopf erforderlich ist.

Im Hinblick auf die Anordnung mit verstellbaren Rotorblättern kann vorgesehen sein, daß zum Schutz des Rotorblattlagers die Leiterbahnen der einzelnen Rotorblätter an einen über den Umfang des betreffenden Rotorblatts verlaufenden Rotorblattring aus leitendem Material als Elektrode angeschlossen sind und daß dem Rotorblattring unter Zwischenschaltung einer Funkenstrecke ein die Nabe des Rotors umschließender Nabenring aus leitendem Material als Gegenelektrode zugeordnet ist. Dabei kann auch vorgesehen sein, daß zwischen dem Rotorblattring und den Befestigungsbolzen für das Rotorblatt am Flansch der Nabe eine Isolierung vorgesehen ist, die beispielsweise dadurch ausgeführt sein kann, daß die Befestigungsbolzen mit einem Kragen aus einem isolierenden Material versehen sind. Es ist aber alternativ auch vorgesehen, zwichen dem Befestigungsbolzen und dem Rotorblattring parallel zu letzterem einen Isolierring anzuordnen und auf diese Weise die Befestigungsbolzen aus einem eventuellen Blitzstromübertragungsweg zu isolieren.

Zur Ableitung des Blitzstromes bei einem gegenüber dem Turmkopf pendelnd aufgehängten Rotor kann nach einem Ausführungsbeispiel der Erfindung vorgesehen sein, dem als Elektrode wirkenden Nabenring eine am Turmkopf angeordnete und sich über einen Umfangsabschnitt erstreckende Gegenplatte als Gegenelektrode zuzuordnen, die einen eine Funkenstrecke ermöglichenden Abstand zum Nabenring aufweist; dabei kann die am Turmkopf angeordnete Gegenplatte einen den Nabenring in jeder Neigungslage des Rotors zum Turmkopf mit gleichem Abstand umschließenden gebogenen Abschnitt aufweisen. Entsprechend ist nach einem Vorschlag der Erfindung die längs des Turmkopfes bis in die Nähe des Turmes verlaufende Gegenplatte gegen das Gehäuse des Turmkopfes über Isolatoren gehalten.

Zum Anschluß des drehbar auf dem Turm gelagerten Turmkopfes weist nach einem Ausführungsbeispiel der Erfindung der Turm auf seinem Umfang einen als Gegenelektrode zur Gegenplatte des Turmkopfes wirkenden Turmring aus einem leitenden Material auf. Hierbei endet die Gegenplatte des Turmkopfes in einer Spitze, welche einen eine Funkenstrecke ermöglichenden konstanten Abstand zum Turmring aufweist.

Nach Ausführungsbeispielen der Erfindung können die Leiterbahnen der Rotorblätter aus Kupfergewebe oder aus einem flammgespritzten Kupfer/Glas-Gewebe bestehen, ebenso wie der Rotorblattring und/oder der Nabenring aus Metallrohr, beispielsweise Kupfer, Aluminium, Eisen oder einer Legierung wie zum Beispiel Messing, ausgebildet sein können. Besonders zweckmäßig sind abbrandfeste Werkstoffe wie zum Beispiel Kupfer-Wolfram-Legierungen oder Kupfer-Chrom-Legierungen.

Durch kapazitive Steuerungen der einzelnen Funkenstrecken kann sichergestellt werden, daß selbst bei mehreren in Reihe geschalteten Entladungsstreckenanordnungen eine Durchzündspannung eingestellt werden kann, die deutlich unter der Isolationsfestigkeit der zu schützenden Anlageteile liegt, so daß die einzelnen Anlageteile der Windkraftanlage vor einer zu hohen Spannungsbeanspruchung geschützt sind.

Der Blitzschutz kann nach einem Ausführungsbeispiel dadurch noch verbessert werden, daß auf dem Turmkopf eine Fangstange mit niederimpedanter Verbindung zur Erde mittels einer an sämtlichen Lagern und Anlagenteilen vorbeiführenden Erdleitung aufgesetzt ist; es kann ferner vorgesehen sein, daß die auf dem Turmkopf angebrachte Fangstange zur Erzeugung pulsierender Koronaentladungen eingerichtet ist, wodurch eine fiktive Fangstangenerhöhung bewirkt ist. Soweit nämlich bekannterweise ein Entladungskanal zwischen einer Wolke und in exponierter Lage auf der Erde befindlichen Gebäuden dadurch auftritt, daß dem Leitblitzkanal eine Fangentladung von der exponierten Anlage entgegenwächst, kann aufgrund der vorstehenden Blitzschutzeinrichtung die Ausbildung von Fangentladungen nur eingeschränkt genutzt werden. Dagegen kann eine auf dem Turmkopf aufgesetzte Fangstange, welche auch im stationären Betrieb niederimpedant mit dem Erdreich beziehungsweise der Ortserde verbunden ist, die Ausbildung von Fangentladungen bewirken und den Leitkanal des Blitzes einfangen.

Der auf dem Turmkopf befindliche Generator, dessen Stromzuführungen beziehungseise -Abgänge mit den Erd- und Potentialleitungen des Stromnetzes verbunden sind, ist nach einem Ausführungsbeispiel gegenüber hohen Impulsspannungen infolge direkter Blitzeinwirkung ebenfalls geschützt; dieses ist nach einem Ausführungsbeispiel der Erfindung über Längs- und teilweise auch Querschutzbausteine verwirklicht, wobei die Längsschutzbausteine blitzstromtragfähig und netzfolgestromlöschend ausgebildet sind.

Am Fußpunkt des Turmes beziehungsweise in den Schaltschränken und/oder Klemmenkästen der Windkraftanlage sind blitzstromtragfähige und netzfolgestromlöschende Längsschutzkomponenten vorgesehen, wobei die Verbindungsleitungen zwischen dem Generator und der Erde ebenfalls blitzstromtragfähig ausgeführt sind.

Schließlich ist nach einem Ausführungsbeispiel der Erfindung vorgesehen, daß die längs des Turmes verlaufenden Steuerleitungen mit spannungsbegrenzenden Schutzkomponenten versehen sind, um infolge Induktion mögliche Überkopplungen zwischen den blitzstromableitenden Strompfaden im Turm und den in deren Nähe angeordneten Steuerleitungen auszuschließen. Diese spannungsbegrenzenden Bausteine können ebenfalls als Entladungsstrecken und/oder Varistorbausteine ausgebildet sein, um den Überspannungsschutz dieser Steuerleitungen zu gewährleisten.

Soweit nach einem Ausführungsbeispiel der Erfindung vorgesehen ist, daß die Längsspannungsschutzkomponenten als bei transienter Spannungsbeanspruchung mit hinreichend hoher Amplitude in weniger als einer Mikrosekunde ansprechende Entladungsstrecken ausgebildet sind, ist hiermit der Vorteil verbunden, daß über die sehr schnell ansprechenden Längsspannungsschutzkomponenten, welche im stationären Betrieb auf die phasenspannung der Spannungsebene abzustimmen sind, die bei Blitzeinschlag auftretende hohe Spannung zwischen beispielsweise dem Generatorgehäuse und dem an Niederspannung angeschlossenen Generator auf ungefährliche Werte abgesenkt wird.

Nach Ausführungsbeispielen der Erfindung sind die Längsspannungsschutzkomponenten als Funkenstrekken, Gasentladungsstrecken oder Gleitentladungsstrekken ausgebildet.

Zur Reduzierung des Netzfolgestromes kann vorgesehen sein, den Schutzkomponenten niederimpedante Widerstände in Reihe zuzuschalten.

Weiterhin ist nach einem Ausführungsbeispiel der Erfindung vorgesehen, den Längsspannungsschutzkomponenten zur Reduzierung der Blitzteilströme Induktivitäten vorzuschalten, wobei die den Blitzteilstrom begrenzenden Impedanzen in die Phasenleitungen integriert sein können.

Nach Ausführungsbeispielen der Erfindung können die Längsspannungsschutzkomponenten als blitzstromtragfähige Varistoren ausgelegt sein oder auch als Kombinationsschaltungen aus Entladungsstrecken und Varistoren ausgebildet sein.

Nach der Erfindung kann vorgesehen sein, Längsspannungsschutzkomponenten auch im unteren Bereich des Turmes anzuordnen und dort die Ableitung des Blitzstromes in die Erde zu ermöglichen.

Schließlich ist nach einem Ausführungsbeispiel der Erfindung vorgesehen, daß die Querschutzkomponenten ebenfalls netzfolgestromlöschend ausgebildet sind.

In der Zeichnung sind Ausführungsbeispiele der Erfindung wiedergegeben, welche nachstehend beschrieben sind.

Es zeigen:

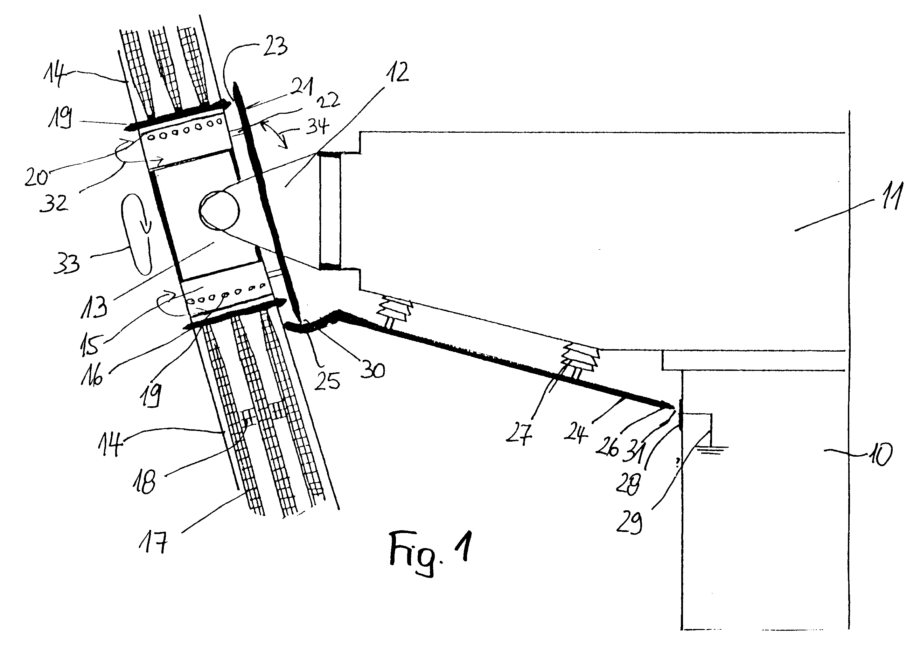

Fig. 1     eine ausschnittsweise Darstellung des Turmes mit Turmkopf und Rotor einer Windkraftanlage,

Fig. 2     den Turmkopf mit Rotor in einer Frontansicht,

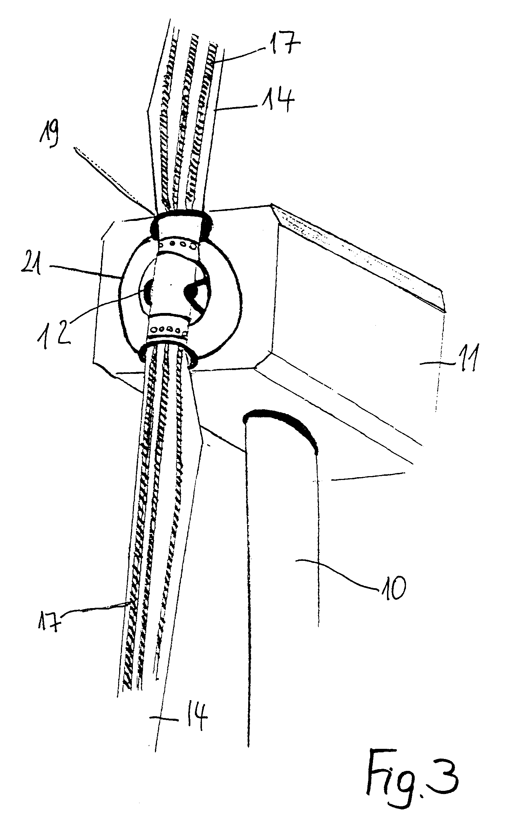

Fig. 3     den Gegenstand der Figur 2 in einer perspektivischen Darstellung,

Fig. 4     in Schaltungsform die Maßnahmen zum inneren Blitzschutz bei einem im Turm der Wandkraftanlage untergebrachten Generator.

Auf einem Turm 10 einer Windkraftanlage sitzt ein Turmkopf 11, der an seinem vorderen Ende einen Pendelrahmen 12 trägt, in welchem eine Nabe 13 eines Rotors derart gelagert ist, daß eine Verschwenkung des Rotors in Richtung des Pfeiles 34 zum Turmkopf möglich ist. An die Nabe 13 sind über deren Flansch 15 durchgreifende Schraubbolzen 16 Rotorblätter 14 angeschlossen, wobei die Rotorblätter 14 gegenüber der Nabe 13 durch eine im einzelnen nicht weiter dargestellte Lagerung in Richtung der Doppelpfeile 32 verstellbar sind. Die Rotorblätter 14 laufen in Richtung des Pfeils 33 um.

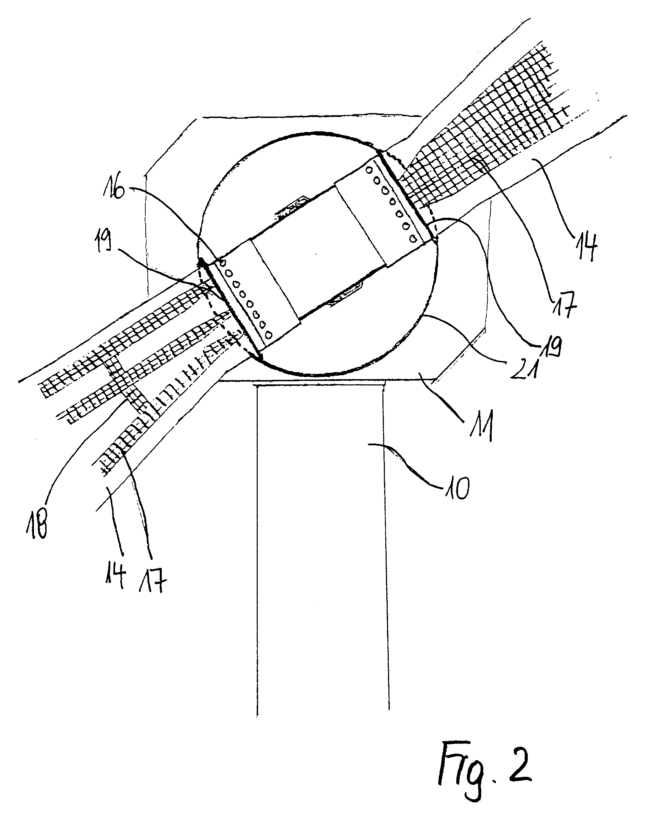

Zur Einrichtung eines Ableitweges für den Blitzstrom sind die Rotorblätter 14 mit mehreren parallel über die Länge der Rotorblätter 14 verlaufenden Leiterbahnen 17 aus einem Gewebe von beispielsweise Kupferdrähten versehen, wobei die längslaufenden Leiterbahnen 17 über die Länge der Rotorblätter 14 mehrfach durch quer dazu angeordnete Leiterbahnen 18 verbunden sind. Wie aus Figur 2 ersichtlich, kann in einem Rotorblatt 14 auch eine einzige entsprechend breit ausgeführte Leiterbahn 17 angeordnet sein. Die Leiterbahnen 17 enden in einem Rotorblattring 19, der beispielsweise aus Kupferrohr besteht, wobei dieser Rotorblattring 19 gegenüber den Schraubbolzen 16 durch einen dazwischenliegenden Isolierring 20 isoliert ist, so daß ein auftretender Blitzstrom nicht bis an die Schraubverbindung und von dort bis in das zugeordnete Lager für die beweglichen Rotorblätter sowie den Nabenkörper gelangen kann.

Dem insoweit als Elektrode wirkenden Rotorblattring 19 ist turmkopfseitig ein als Gegenelektrode wirkender, von der Nabe 13 über Halter 22 getragener Nabenring zugeordnet, der einen solchen Abstand zum Rotorblattring 19 aufweist, daß sich bei entsprechender Blitzstrombeanspruchung eine Funkenstrecke als Entladungsstrecke 23 ausbildet.

Der Ableitweg für den Blitzstrom wird im Bereich des Turmkopfes 11 weiter vervollständigt durch eine an dem Turmkopf 11 über Isolatoren 27 gehaltene Gegenplatte 24, die an ihrem dem Nabenring 21 zugeordneten Ende in einem gebogenen Abschnitt 25 endet, welcher den Nabenring 21 in jeder Neigungslage des Rotors zum Turmkopf 11 mit gleichem Abstand umschließt; damit ist auch bei unterschiedlichen Neigungsstellungen in dem mit Pfeil 34 angeordneten Bereich die Ausbildung einer als Funkenstrecke wirkenden Entladungsstrecke 30 gewährleistet. An ihrem turmseitigen Ende weist die Gegenplatte 24 eine Spitze 26 auf, und diese Spitze 26 liegt in einem eine Funkenstrecke als Entladungsstrecke 31 ermöglichenden Abstand zu einem auf dem äußeren Umfang des Turmes 10 angeordneten Turmring 28 aus einem leitenden Material, welcher mit dem Erdpotential 29 leitend verbunden ist.

Beim Auftreten eines Blitzeinschlages in ein Rotorblatt 14 wird der dadurch bewirkte Blitzstrom über die Leiterbahnen 17, 18, den Rotorblattring 19, den Nabenring 21, die Gegenplatte 24 und den Turmring 28 zum Erdpotential 29 abgeleitet, wobei die in Reihe liegenden Entladungsstrecken 23, 30, 31 durchgezündet werden. Bei Normalbetrieb dagegen sind die Entladungsstrecken 23, 30, 31 unwirksam, so daß die Rotorblätter 14 zum Erdpotential galvanisch getrennt sind.

Aufgrund der vorbeschriebenen Ausführung der konstruktiven Elemente des Ableitweges für den Blitzstrom ist gegeben, daß bei einem Gewitter die Windkraftanlage nicht stillzusetzen ist, weil der Ableitweg bei laufendem Rotor und in jeder Stellung der beteiligten Bauteile zueinander gegeben ist.

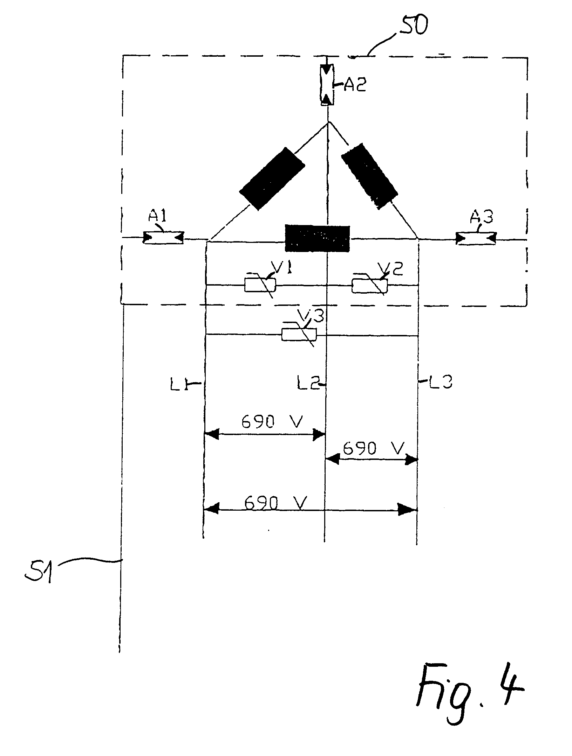

Soweit in Figur 4 die Maßnahmen zum inneren Blitzschutz bei einem im Turm der Windkraftanlage untergebrachten Generator in Schaltungsform dargestellt sind, ist als Besonderheit von Windkraftanlagen zunächst die treibende Netzspannung von 690 V zu sehen; diese Spannung wird - ebenso wie die Netzspannung von 230 V beziehungsweise Spannungsebenen von Meß-Steuer-Regelkreisen - bis zur Generatorebene weitergeleitet. Der Generator wird beispielsweise bei einer verketteten Spannung von 690 V betrieben, wogegen das Generatorgehäuse auf Erdpotential liegt.

Dieses Erdpotential kann sich bei einem Blitzeinschlag kurzzeitig deutlich erhöhen, wobei Ursache hierfür der große Spannungsabfall ist, der im Falle eines Blitzeinschlages am Turm des Windkraftwerkes abfällt. Geht man von einer dynamischen Spannungsveränderung im Einschlagfall nach folgender Gleichung aus:

$$U_L = L \cdot di/dt$$

so läßt sich der Spannungsabfall überschlägig wie folgt berechnen:

angenommene Blitzstromsteilheit:
20 kA/μs
angenommene Induktivität des Turmes:
$L = 1 \ \mu H/m$

- jeweils abhängig von der Turmhöhe und der Leitungsführung im Turm -

Somit verfügt ein etwa 50 m hoher Turm einer Windkraftanlage über eine Induktivität von ca. 50 μH; geht man weiterhin von 20 kA/μs als Blitzstromsteilheit aus, so beläuft sich der Spannungswert längs des Turmes auf rund 1,0 MV.

Diese vorgenannte Spannung baut sich nun zwischen den geerdeten Teilen der Generatorebene und den an Niederspannung beziehungsweise 230 V oder 690 V angeschlossenen Betriebsmitteln auf.

Nachfolgend seien am Beispiel des Generators die Gefährdungen der elektrischen und elektronischen Betriebsmittel sowie deren möglicher Schutz dargestellt: Die Wicklungsisolation des Generators weist in der Regel nur eine Spannungsfestigkeit von einigen wenigen kV auf. Ehe die Spannungsfestigkeit der Generatorisolation überschritten ist, muß die Spannung zwischen dem Generatorgehäuse 10 und dem an Niederspannung angeschlossenen Generator auf ungefährliche Werte abgesenkt werden, was über sehr schnell ansprechende Längsspannungsschutzkomponenten A1, A2, A3 erfolgen kann, welche im stationären Betrieb auf die Phasenspannung der Spannungsebene abzustimmen sind.

Nach dem Ansprechen der Längsspannungskomponenten liegt nun jedoch auch die erhöhte Spannung auf den Phasenleitungen L1, L2, L3. Der Blitzstrom fließt über die Längsspannungsschutzkomponenten A1, A2, A3 auf die Phasenleitungen L1, L2, L3 und dort bodenwärts. Hierbei baut sich auf den Phasenleitungen L1, L2, L3 die große Spannung zwischen dem Generatorgehäuse 50 und der Erde beziehungsweise Erdleitung 51 ab. Durch die Zündung der Längsspannungsschutzkomponenten, die vorzugsweise extrem niederimpedant ausgelegt sein müssen, um keinen weiteren unzulässig hohen Spannungsabfall zu erzeugen, kann nun auch das Netz in die Zündstelle einen Netzfolgestrom treiben; wenn dieser erfindungsgemäß gelöscht wird, kann die Anlage nach Abklingen des Blitzstromes wieder in den zuverlässigen und störungsfreien Betrieb übergehen.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Windkraftanlage mit einem Turm, in deren von diesem getragenen Turmkopf ein von einem Rotor angetriebener Generator angeordnet ist, wobei der Rotor um eine vom Turmkopf gehaltene Nabe drehbar und mit Rotorblättern versehen ist, wobei die Windkraftanlage eine Blitzschutzeinrichtung aufweist, dadurch gekennzeichnet, daß die Rotorblätter (14) über ihren Verlauf wenigstens eine Leiterbahn (17) aus einem leitenden Material aufweisen und daß die Leiterbahnen (17) im Normalbetrieb zum Erdpotential (29) galvanisch getrennt und bei durch atmosphärische Entladung gegebener Blitzstrombeanspruchung eine niederohmige Verbindung zwischen den Leiterbahnen (17) der Rotorblätter (14) und der Erde über durch die Beanspruchung gezündete Entladungsstrecken (23, 30, 31) mit nachfolgender Erdleitung (29) geschaltet ist.

2. Windkraftanlage nach Anspruch 1, dadurch gekennzeichnet, daß die in jedes Rotorblatt (14) eingebrachten Leiterbahnen (17) aus einem Geflecht von Einzelleitern aus einem gut leitenden Material bestehen.

3. Windkraftanlage nach Anspruch 1 oder 2, dadurch gekennzeichnet, daß in jedem Rotorblatt (14) mehrere längslaufende Leiterbahnen (17) nebeneinander angeordnet sind, zwischen denen mehrfache niederimpedante Leiterverbindungen (18) bestehen.

4. Windkraftanlage nach einem der Ansprüche 1 bis 3, dadurch gekennzeichnet, daß die Spitze der Rotorblätter (14) mit einer an deren Leiterbahnen (17) angeschlossenen Kappe aus einem gut leitenden Material versehen ist.

5. Windkraftanlage nach einem der Ansprüche 1 bis 4, dadurch gekennzeichnet, daß die Entladungsstrecken (23, 30, 31) zwischen den Leiterbahnen (17) der Rotorblätter (14) und der Erdleitung (29) unter Umgehung der jeweiligen Lagerteile von Rotorblättern (14) an der Nabe (13) und/oder der Nabe (13) am Turmkopf (11) und/oder Turmkopf (11) am Turm (10) mittels abbrandfester an den einander zugeordneten Bauteilen (10, 11, 13, 14) angeordneten Elektroden (19, 21, 24, 28) mit jeweils einem konstanten Elektrodenabstand ausgebildet sind.

6. Windkraftanlage nach Anspruch 5, dadurch gekennzeichnet, daß die Schlagweite der Entladungsstrecken (23, 30, 31) weniger als 50 mm beträgt.

7. Windkraftanlage nach einem der Ansprüche 1 bis 6, dadurch gekennzeichnet, daß die Elektroden (19, 21, 24, 28) von Rotorblättern (14), Nabe (13), Turmkopf (11) und Turm (10) derart angeordnet sind, daß der konstante Elektrodenabstand auch bei einer Lageveränderung der jeweiligen Bauteile gegeneinander gegeben ist.

8. Windkraftanlage nach Anspruch 7 mit verstellbaren Rotorblättern, dadurch gekennzeichnet, daß zum Schutz des Rotorblattlagers die Leiterbahnen (17) der einzelnen Rotorblätter (14) an einen über den Umfang des betreffenden Rotorblatts (14) verlaufenden Rotorblattring (19) aus leitendem Material als Elektrode angeschlossen sind und daß dem Rotorblattring (19) unter Zwischenschaltung einer Funkenstrecke (23) ein die Nabe (13) des Rotors umschließender Nabenring (21) aus leitendem Material als Gegenelektrode zugeordnet ist.

9. Windkraftanlage nach Anspruch 8, dadurch gekennzeichnet, daß zwischen dem Rotorblattring (19) und den Befestigungsschrauben (16) des einzelnen Rotorblatts (14) am Flansch (15) der Nabe (13) eine Isolierung (20) vorgesehen ist.

10. Windkraftanlage nach Anspruch 9, dadurch gekennzeichnet, daß die Befestigungsbolzen (16) mit einem Kragen aus einem isolierenden Material versehen sind.

11. Windkraftanlage nach einem der Ansprüche 1 bis 10 mit einer Pendellagerung für den Rotor, dadurch gekennzeichnet, daß dem als Elektrode wirkenden Nabenring (21) eine am Turmkopf (11) angeordnete und sich über einen Umfangsabschnitt erstreckende Gegenplatte (24) als Gegenelektrode in einem eine Funkenstrecke (30) ermöglichenden Abstand zugeordnet ist.

12. Windkraftanlage nach Anspruch 11, dadurch gekennzeichnet, daß die am Turmkopf (11) angeordnete Gegenplatte (24) einen den Nabenring (21) in jeder Neigungslage des Rotors zum Turmkopf (11) mit gleichem Abstand umschließenden gebogenen Abschnitt (25) aufweist.

13. Windkraftanlage nach Anspruch 11 oder 12, dadurch gekennzeichnet, daß die längs des Turmkopfes (11) bis in Nähe des Turmes (10) verlaufende Gegenplatte (24) gegen das Gehäuse des Turmkopfes über Isolatoren (27) gehalten ist.

14. Windkraftanlage nach einem der Ansprüche 1 bis 13, dadurch gekennzeichnet, daß der Turm (10) auf seinem Umfang einen als Gegenelektrode zur Gegenplatte (24) des Turmkopfes (11) wirkenden Turmring (28) aus einem leitenden Material aufweist, und daß die Gegenplatte (24) des Turmkopfes (11) in einer einen eine Funkenstrecke (31) ermöglichenden konstanten Abstand zum Turmring (28) aufweisenden Spitze (26) endet.

15. Windkraftanlage nach Anspruch 14, dadurch gekennzeichnet, daß die Spitze (26) der Gegenplatte als einstellbare Schraube ausgebildet ist.

16. Windkraftanlage nach einem der Ansprüche 1 bis 15, dadurch gekennzeichnet, daß die Leiterbahnen (17, 18) der Rotorblätter (14) aus Kupfergewebe bestehen.

17. Windkraftanlage nach einem der Ansprüche 1 bis 15, dadurch gekennzeichnet, daß die Leiterbahnen (17, 18) der Rotorblätter (14) aus einem flammgespritzten Kupfer/Glas-Gewebe bestehen.

18. Windkraftanlage nach einem der Ansprüche 1 bis 17, dadurch gekennzeichnet, daß Rotorblattring (19) und/oder Nabenring (21) aus einem Metallrohr bestehen.

19. Windkraftanlage nach einem der Ansprüche 12 bis 14, dadurch gekennzeichnet, daß die Gegenplatte (24) in ihrem Bereich zwischen dem gebogenen Abschnitt (25) und der Spitze (26) aus einer Kabelverbindung besteht.

20. Windkraftanlage nach einem der Ansprüche 1 bis 19, dadurch gekennzeichnet, daß auf dem Turmkopf (11) eine Fangstange mit niederimpedanter Verbindung zur Erde mittels einer an sämtlichen Lagern und Anlagenteilen vorbeiführenden Erdleitung aufgesetzt ist.

21. Windkraftanlage nach Anspruch 20, dadurch gekennzeichnet, daß die auf dem Turmkopf (11) aufgesetzte Fangstange zur Erzeugung von pulsierenden Koronaentladungen eingerichtet ist.

22. Windkraftanlage nach einem der Ansprüche 1 bis 21, dadurch gekennzeichnet, daß zum Schutz des im Turmkopf (11) angeordneten Generators blitzstromtragfähige und netzfolgestromlöschende Schutzbausteine vorgesehen sind.

23. Windkraftanlage nach einem der Ansprüche 1 bis 22, dadurch gekennzeichnet, daß zum Schutz der elektrischen Anlagenteile in dem Turm (10) zugeordneten Schaltschränken und/oder Klemmenkästen blitzstromtragfähige und netzfolgestromlöschende Längsschutzkomponenten vorgesehen sind.

24. Windkraftanlage nach einem der Ansprüche 1 bis 23, dadurch gekennzeichnet, daß die Längsspannungsschutzkomponenten (A1, A2, A3) als bei transienter Spannungsbeanspruchung mit hinreichend hoher Amplitude in weniger als einer Mikrosekunde ansprechende Entladungsstrecken ausgebildet sind.

25. Windkraftanlage nach Anspruch 24, dadurch gekennzeichnet, daß die Längsspannungsschutzkomponenten (A1, A2, A3) als Funkenstrecken ausgebildet sind.

26. Windkraftanlage nach Anspruch 24, dadurch gekennzeichnet, daß die Längsspannungsschutzkomponenten (A1, A2, A3) als Gasentladungsstrekken ausgebildet sind.

27. Windkraftanlage nach Anspruch 24, dadurch gekennzeichnet, daß die Längsspannungsschutzkomponenten (A1, A2, A3) als Gleitentladungsstrekken ausgebildet sind.

28. Windkraftanlage nach einem der Ansprüche 24 bis 27, dadurch gekennzeichnet, daß zur Reduzierung des Netzfolgestromes niederimpedante Widerstände mit den Längsspannungsschutzkomponenten (A1, A2, A3) in Reihe geschaltet sind.

29. Windkraftanlage nach einem der Ansprüche 24 bis 28, dadurch gekennzeichnet, daß zur Reduzierung der Blitzteilströme den Längsspannungsschutzkomponenten (A1, A2, A3) Induktivitäten vorgeschaltet sind.

30. Windkraftanlage nach Anspruch 28 oder 29, dadurch gekennzeichnet, daß die den Blitzteilstrom begrenzenden Impedanzen in die Phasenleitungen (L1, L2, L3) integriert sind.

31. Windkraftanlage nach einem der Ansprüche 24 bis 30, dadurch gekennzeichnet, daß die Längsspannungsschutzkomponenten (A1, A2, A3) als blitzstromtragfähige Varistoren ausgelegt sind.

32. Windkraftanlage nach einem der Ansprüche 24 bis 31, dadurch gekennzeichnet, daß die Längsspannungsschutzkomponenten (A1, A2, A3) Kombinationsschaltungen aus Entladungsstrecken und Varistoren sind.

33. Windkraftanlage nach einem der Ansprüche 24 bis 32, dadurch gekennzeichnet, daß auch im unteren Bereich des Turmes Langsspannungsschutzkomponenten (A1, A2, A3) zur Ableitung des Blitzstromes in die Erde angeordnet sind.

34. Windkraftanlage nach einem der Ansprüche 24 bis 33, dadurch gekennzeichnet, daß die Querspannungsschutzkomponenten (V1, V2, V3) netzfolgestromlöschend konzipiert sind.

35. Windkraftanlage nach einem der Ansprüche 1 bis 34, daß die längs des Turmes (10) verlaufenden Steuerleitungen mit spannungsbegrenzenden Schutzkomponenten versehen sind.

Fig. 1

Fig. 2

Fig.3

Fig. 4

Europäisches Patentamt

**EUROPÄISCHER RECHERCHENBERICHT**

Nummer der Anmeldung

EP 95 12 0075

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | WO-A-84 01673 (ERICSSON TELEFON AB L M) 26.April 1984 * Zusammenfassung * * Seite 2, Zeile 8 - Zeile 24; Abbildung * --- | 1 | F03D11/00 H02G13/00 |
| A | DE-C-11 195 (W.KIRCHNER) 22.Oktober 1880 * das ganze Dokument * --- | 1 | |
| A | DE-C-28 489 (H. WACHTMANN) 27.August 1884 * das ganze Dokument * --- | 1 | |
| A | GB-A-2 218 473 (MOTOREN TURBINEN UNION) 15.November 1989 * Zusammenfassung * --- | 1 | |
| A | DE-A-38 17 073 (RIETZSCHER ROLF) 29.Dezember 1988 * Anspruch 10 * ----- | 1 | |
| | | | **RECHERCHIERTE SACHGEBIETE (Int.Cl.6)** |
| | | | F03D H02G H01R |

Der vorliegende Recherchenbericht wurde für alle Patentansprüche erstellt

| Recherchenort | Abschlußdatum der Recherche | Prüfer |
|---|---|---|
| DEN HAAG | 11.April 1996 | Criado Jimenez, F |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P04C03)